# EUROPÄISCHE PATENTSCHRIFT

(11) **EP 3 957 423 B1**
(45) Veröffentlichungstag und Bekanntmachung des Hinweises auf die Patenterteilung: **11.01.2023**
(21) Anmeldenummer: 21182394.3
(22) Anmeldetag: 29.06.2021
(51) Int. Cl.: B23D 45/06, B23D 59/00, B27B 5/22, B27B 27/02, B27B 27/10

(54) **SICHERHEITSARCHITEKTUR FÜR HOLZBEARBEITUNGSMASCHINEN**
SECURITY ARCHITECTURE FOR WOODWORKING MACHINES
ARCHITECTURE DE SÉCURITÉ POUR MACHINES D'USINAGE DU BOIS

(30) Priorität: 19.08.2020 DE 202020104817 U
(43) Veröffentlichungstag der Anmeldung: 23.02.2022
(73) Patentinhaber: Otto Martin Maschinenbau GmbH & Co. KG, 87724 Ottobeuren (DE)
(72) Erfinder: Balom, Josef, 89081 Ulm (DE)
(74) Vertreter: ERNICKE Patent- und Rechtsanwälte PartmbB

(56) Entgegenhaltungen:
- EP-A2- 1 052 073
- WO-A1-2006/026551
- US-A1- 2008 282 862

## Beschreibung

Die Erfindung liegt auf dem Gebiet der Sicherheitstechnik für Materialbearbeitungsmaschinen, insbesondere Holz- und Kunststoffbearbeitungsmaschinen, bspw. Sägen und Fräsen.

Materialbearbeitungsmaschinen, wie bspw. Formatkreissägen oder Fräsen, umfassen häufig neben dem eigentlichen Bearbeitungsmittel, z.B. dem Sägeblatt oder dem Fräskopf, ein oder mehrere Stellobjekte, die verstellt werden können. Ein solches Stellobjekt kann beispielsweise ein einstellbarer Werkstückanschlag oder eine Werkstückführung sein, mit der sich das Werkstück je nach Bearbeitungswusch des Nutzers positionieren und/oder führen lässt.

Besonders bei hochentwickelten Maschinen ist es wünschenswert, die Stellobjekte elektromotorisch oder mit einem anderen Antrieb verfahren und präzise positionieren zu können. So kann beispielsweise die Schnittlinie bei einer Kreissäge durch manuelle oder auch motorische Positionierung eines Werkstückanschlags eingestellt werden.

Die motorische Verstellung des Stellobjekts birgt jedoch Sicherheitsrisiken, sobald das Stellobjekt auch in einen Gefahrenbereich, z.B. am Sägeblatt, hineingefahren werden kann. In vielen Fällen kann es für die Funktionalität der Maschine wünschenswert sein, es dem Benutzer zu ermöglichen, das Stellobjekt bewusst in oder nahe an einen Gefahrenbereich heranzufahren, um auch kleine Bauteilabmessungen oder filigrane Bauteile bearbeiten zu können.

Im Gefahrenbereich nähert sich das Stellobjekt einem gefährlichen Zustand an. Beispielsweise kann der Werkstückanschlag mit dem Sägeblatt oder einem Fräskopf kollidieren. Bei einer Kollision können erhebliche Schäden und Gefahren für den Bediener entstehen, die auch bei einer Fehlfunktion, z.B. dem Ausfall eines elektrischen Bauteils, vermieden werden sollen.

In manchen Situationen ist der Gefahrenbereich statisch, d.h. die Abmessungen des Gefahrenbereichs sind konstant. In manchen Fällen kann der Gefahrenbereich, z.B. bei einem schwenkbaren Sägeblatt oder einem Fräskopf mit unterschiedlichen Abmessungen, auch dynamisch sein und sich während des Betriebs verändern. Es kann daher notwendig sein, die Ausdehnung bzw. die Grenzen eines Gefahrenbereichs während des Betriebs laufend zu berechnen.

Bei der Konstruktion von mechatronischen Systemen, die ein motorisches Verfahren eines Stellobjekts in einem sicherheitskritischen Bereich ermöglichen, müssen verschiedene Sicherheitsanforderungen berücksichtigt werden. Diese Sicherheitsanforderungen ergeben sich beispielsweise aus technischen Normen, die Anforderungen an die Qualität der Bauteile und Maßnahmen hinsichtlich der Ausfallsicherheit definieren.

Bei der Sicherheitsbeurteilung eines mechatronischen Systems und der Beurteilung deren Eignung zur Ausführung einer sicherheitsrelevanten Funktion muss die Sicherheitsstufe - der sog. "Performance Level" (PL) - des Systems bestimmt werden, wobei mehrere Stufen von PLa bis PLe definiert sind. Für bestimmte sicherheitskritische Funktionen ist ein System mit einem Mindest-Performance Level gefordert (z.B: PLc).

Der Performance Level des Systems wird in einer Gesamtbetrachtung ermittelt und bezieht sich auf die gesamte Kette von der Aufnahme von Information (z.B. durch einen Sensor) über die Verarbeitung und Auswertung in einer Logikeinheit (z.B. einer speicherprogrammierbare Steuerung SPS) bis zur Ausführung einer Aktion (z.B. mit einem Aktor). Auch die Signalübertragung zwischen den Komponenten wird berücksichtigt.

Zur Erreichung eines hohen Performance Level schlägt der Stand der Technik bestimmte Sicherheitsarchitekturen vor, bei der Komponenten (z.B. Steuerungen) redundant ausgeführt werden und/oder eine hohe Ausfallsicherheit bieten müssen. Je nach Architektur müssen zur Erreichung bestimmter Performance Level Komponenten eine ausreichend hohe Sicherheitszertifizierung aufweisen.

Die redundante Ausführung von Komponenten führt zu doppelten Kosten für Bauteile. Komponenten mit hoher Ausfallsicherheit und sicherheitszertifizierte Bauteile können gegenüber herkömmlichen Elektronikbauteilen ebenfalls zu stark erhöhten Kosten führen.

Das Dokument EP 1 052 073 A2 offenbart eine Tischkreissäge mit einem beweglichen Schlitten, einem festen Tisch, einem Sägeblatt und einem seitlichen Referenzanschlag für die zu sägende Holzplatte. Der Anschlag ist durch eine kinematische Kette mit einem Motor verbunden und umfasst Mittel zur mechanischen Begrenzung der übertragenen Kraft. Die Säge umfasst außerdem Mittel zur Erfassung der Position des Anschlags.

Aufgabe der vorliegenden Erfindung ist es eine verbesserte Sicherheitsarchitektur für Holzbearbeitungsmaschinen bereitzustellen. Die Erfindung löst die Aufgabe mit den Merkmalen des Hauptanspruchs.

Die Holzbearbeitungsmaschine ist zur Bearbeitung von Werkstücken aus Holz oder Kunststoff geeignet. Bei der Holzbearbeitungsmaschine kann es sich beispielsweise um eine Kreissäge oder eine Fräse handeln. Die Bearbeitungsmaschine, insbesondere eine Tischkreissäge oder eine Tischfräse, umfasst vorzugsweise einen Bearbeitungstisch, auch Maschinentisch genannt. Zur Bearbeitung eines Werkstücks wird das Werkstück in der Regel über den Bearbeitungstisch geführt. Die Holzbearbeitungsmaschine umfasst ein oder mehrere Bearbeitungsmittel zur Bearbeitung des Werkstücks. Vorzugsweise werden die hier offenbarten Holzbearbeitungsmaschinen zur spanenden Bearbeitung von Werkstücken eingesetzt. Das Bearbeitungsmittel (z. B. ein Sägeblatt) verfügt in der Regel über einen eigenen Hauptantrieb und kann mit hohen Drehzahlen betrieben werden. Das Bearbeitungsmittel, insbesondere das Sägeblatt oder der Fräskopf, ist zur unmittelbaren Bearbeitung des Werkstücks ausgebildet.

Neben dem Bearbeitungsmittel umfasst die Holzbearbeitungsmaschine ein oder mehrere Stellobjekte. Das Stellobjekt ist vorzugsweise auf oder an dem Maschinentisch angeordnet. Das Stellobjekt kann insbesondere einen Werkstückanschlag, eine Werkstückaufnahme, eine Werkstückhalterung oder eine Werkstückführung umfassen. Das Stellobjekt dient der Einstellung des Bearbeitungsprozesses, vorzugsweise durch die gesteuerte Positionierung des Werkstücks gegenüber dem Bearbeitungsmittel. In der bevorzugten Ausführungsform umfasst die Maschine mehrere Stellobjekte, von denen eines oder mehrere elektromotorisch und/oder händisch verstellt werden können.

Bevorzugt umfasst das Stellobjekt einen Werkstückanschlag, z.B. eine auf dem Bearbeitungstisch verschiebbare Leiste. Das Stellobjekt kann in einer oder mehreren Richtungen verfahren werden.

Das Stellobjekt ist vorzugsweise motorisch und/oder manuell verstellbar. Vorzugsweise ist das Stellobjekt relativ zum Bearbeitungsmittel verfahrbar. Die Holzbearbeitungsmaschine umfasst einen oder mehrere Stellantriebe. Das Stellobjekt ist mit dem Stellantrieb in einer einstellbaren Stellposition positionierbar. Der Stellantrieb kann beispielsweise einen Schrittmotor oder einen Linearmotor umfassen. Neben elektromotorischen Antrieben können auch andere Antriebsarten eingesetzt werden.

Der Stellantrieb ist ein separater Antrieb, der dazu ausgebildet ist, unabhängig vom Hauptantrieb für das Bearbeitungsmittel ein oder mehrere Stellobjekte zu verstellen.

Die Position und/oder die Geschwindigkeit des Stellobjekts kann elektronisch gesteuert und/oder geregelt werden. Das Stellobjekt kann entlang einer ein- oder mehrdimensionalen Stellbewegung bewegt werden. In einer besonders vorteilhaften Ausführungsform kann das Stellobjekt sowohl motorisch als auch händisch verstellt werden. So kann es für den Bediener beispielsweise komfortabel sein, eine Grobverstellung des Stellobjekts mit der Hand vorzunehmen und die Endpositionierung durch den Stellantrieb vornehmen zu lassen. Vorzugsweise ist der Stellantrieb zuschaltbar und/oder abschaltbar. Vorzugsweise kann die Positionierung des Stellobjekts mit dem Stellantrieb oder einer anderen Vorrichtung fixiert werden.

Vorzugsweise dient das Stellobjekt der Positionierung und/oder der Führung des zu bearbeitenden Werkstücks in einer oder mehreren Richtungen. Durch Einstellung des Stellobjekts können beispielsweise die Abmessungen des bearbeiteten Werkstücks beeinflusst werden. Bei der Positionierung des Stellobjekts können hohe Anforderungen an die Genauigkeit der Stellbewegung bestehen.

Das Stellobjekt ist durch eine gesteuerte Stellbewegung auch in einen statischen oder dynamischen Gefahrenbereich fahrbar. Die gesteuerte Stellbewegung kann sowohl durch Vorgabe eines Parameters gesteuert und/oder durch Regelung auf eine vorgegebene Position oder Geschwindigkeit geregelt werden. Der Begriff gesteuert im Sinne dieser Offenbarung ist nicht auf eine (Vor-)Steuerung im regelungstechnischen Sinne beschränkt und kann insbesondere auch eine Rückkoppelung einer Messung umfassen. Unter einer gesteuerten Bewegung ist insbesondere auch eine geregelte Bewegung zu verstehen. Es können die Position und/oder die Geschwindigkeit mit einem oder mehreren Sensoren geregelt werden. Je nach Ausführungsform kann auch nur eine der Größen geregelt und die andere gesteuert werden.

Beim Verstellen des Stellobjekts kann das Stellobjekt in einen sicherheitskritischen Bereich und/oder Zustand geraten. Vorzugsweise wird während des Betriebs, insbesondere während der Verstellung des Stellobjekts, laufend die Position und/oder die Geschwindigkeit des Stellobjekts erfasst. Beispielsweise kann die Position des Stellobjekts entlang der Breite des Maschinentisches erfasst werden. Bestimmte Bereiche auf dem Maschinentisch, z. B. der Bereich um das Sägeblatt, kann als Gefahrenbereich definiert werden. Der Gefahrenbereich kann auch durch einen anderen sicherheitskritischen Positionsbereich und/oder ein Geschwindigkeitsintervall definiert sein. Das Stellobjekt muss im Gefahrenbereich nicht unmittelbar mit dem Bearbeitungsmittel kollidieren. Der Gefahrenbereich kann auch durch einen anderen sicherheitskritischen Bereich gegeben sein, in dem das Verfahren des Stellobjekts zu einer besonderen Sicherheitsanforderung führt.

Der Gefahrenbereich für die Verstellung des Stellobjekts ist vorzugsweise ein vorbestimmter Bereich um das Bearbeitungsmittel, insbesondere das Sägeblatt oder den Fräskopf, der Bearbeitungsmaschine. Der Gefahrenbereich ist vorzugsweise durch die Abmessungen und die Lage des Bearbeitungsmittel bestimmt und kann ggfs. einen Sicherheitsabstand, z.B. von 1 bis 50 mm, umfassen. Vorzugsweise wird der Gefahrenbereich bei einem beweglichen Bearbeitungsmittel dynamisch anhand der Position und/oder Lage des Bearbeitungsmittel berechnet, ggfs. durch Hinzurechnung eines Sicherheitsabstands.

Die Holzbearbeitungsmaschine umfasst eine Sicherheitsarchitektur zur sicheren Verstellung des Stellobjekts. Insbesondere die elektromotorische Verstellung des Stellobjekts in oder an einem Gefahrenbereich erfordert eine Sicherheitsarchitektur, die ein ausreichend hohes Performance Level gewährleistet. Ein Vorteil der hier offenbarten Sicherheitsarchitektur ist, dass im Vergleich zu bekannten Architekturen ein hoher Performance Level bei geringeren Bauteilkosten erreicht werden kann. Die Sicherheitsarchitektur ist insbesondere sicherer als eine einkanalige Architektur und kostengünstiger als eine vollredundante zweikanalige Architektur.

Die Sicherheitsarchitektur umfasst mindestens zwei Sensoren zur Ermittlung der Position des Stellobjekts. Vorzugsweise sind die zwei Sensoren als zwei voneinander unabhängige Komponenten ausgebildet. In einer besonders vorteilhaften Ausführungsform ist der erste Sensor in den Stellantrieb des Stellobjekts integriert. Beispielsweise kann der erste Sensor als Inkrementalsensor eines Schrittmotors ausgebildet sein. Der zweite Sensor ist vorzugsweise in einer zusätzlichen Sensoreinrichtung integriert. Der zweite Sensor kann beispielsweise als Magnetbandsensor ausgebildet sein.

Sowohl der erste als auch der zweite Sensor können jeweils dazu ausgebildet sein, eine absolute oder relative Position und/oder eine Geschwindigkeit des Stellobjekts auszugeben. Vorteilhafterweise kann die Geschwindigkeit auch aus der zeitlichen Veränderung der Position errechnet werden. Die Sensoren können über unterschiedliche oder dieselbe Referenz zur Ermittlung einer Relativposition verfügen. Vorzugsweise werden die Sensoren in einem Initialisierungsschritt referenziert, sodass die Sensoren bzw. die Positionsmessungen auf eine gemeinsame Referenz bezogen werden können.

Die Erfassung der Stellposition des Stellobjekts ist vorteilhafterweise redundant ausgebildet. Der Einsatz von zwei unabhängigen Sensoren ermöglicht es, durch Vergleich der ermittelten Positionsmessungen einen Fehler bei einem der Sensoren festzustellen. Die Stellposition kann durch die unabhängigen Sensoren zweikanalig erfasst werden.

Die Sicherheitsarchitektur umfasst weiterhin eine Hauptsteuerung, eine Hilfssteuerung und eine Antriebssteuerung des Stellantriebs. Die Hauptsteuerung ist dazu ausgebildet, Positionsmessungen des ersten Sensors und des zweiten Sensors auszuwerten.

Die Hauptsteuerung umfasst die Steuerungslogik zur Positionierung und/oder Bewegung des Stellobjekts. Die Hauptsteuerung ist dazu ausgebildet, eine Stellanweisung für die Antriebssteuerung zu erzeugen. Mit der Stellanweisung wird die Bewegung des Stellobjekts gesteuert. Die Stellanweisung kann beispielsweise eine Sollposition, eine Sollgeschwindigkeit, einen Motorstrom, eine Motordrehzahl oder einen ähnlichen Steuerparameter für den Antrieb des Stellobjekts umfassen.

Die Hauptsteuerung ist vorzugsweise dazu ausgebildet, neben den Positionsmessungen weitere Systemparameter und/oder Benutzereingaben zu verarbeiten. Vorzugsweise verarbeitet die Hauptsteuerung die Benutzereingaben zur Verstellung des Stellobjekts, die der Nutzer über ein Bedienfeld oder eine andere Bedieneinheit vorgibt. Mit der Berechnung der Stellanweisungen für den Stellantrieb des Stellobjekts fällt der Hauptsteuerung eine sicherheitskritische Rolle zu. Fehlberechnungen und/oder Fehlausgaben der Hauptsteuerung können zu einem fehlerhaften Steuerbefehl für den Stellantrieb des Stellobjekts führen, wodurch im schlimmsten Fall die Maschine beschädigt oder der Bediener verletzt werden könnte.

Die Hauptsteuerung benötigt für die Verarbeitung der Eingangsinformationen sowie zur Ansteuerung der Aktoren eine Vielzahl von Ein- und Ausgängen an der Steuerungskomponente. Die Hauptsteuerung ist vorzugsweise als eine speicherprogrammierbare Steuerung (SPS) ausgebildet. Mit wachsender Größe und Komplexität einer speicherprogrammierbaren Steuerung steigen die Kosten der Komponente. Es ist daher vorteilhaft, die Logik-Komponenten für die Verstellung des Stellobjekts in der Hauptsteuerung zu konzentrieren und nur diese Komponente ausreichend performant, insbesondere für die Berechnung der Steuerungsanweisungen, auszulegen. Zur Absicherung der Funktion umfasst die Sicherheitsarchitektur eine zusätzliche Hilfssteuerung.

Die Hilfssteuerung ist dazu ausgebildet, die Funktionalität der Hauptsteuerung abzusichern. Die Hilfssteuerung umfasst vorzugsweise eine Überwachungskomponente, einen sog. Watchdog. Die Hilfssteuerung ist vorzugsweise dazu ausgebildet, laufend Prüfwerte mit der Hauptsteuerung auszutauschen. Bei einer Abweichung von Vergleichswerten oder einem unerwarteten Prüfwert kann im Rahmen der Überwachung das System stillgelegt werden.

In einer besonders vorteilhaften Ausführungsform bezieht die Hilfssteuerung auch Positionsmessungen des ersten Sensors und/oder des zweiten Sensors. Bevorzugt sind die Positionsmessungen auf eine gemeinsame Referenz normiert. Vorzugsweise wird die Position zweikanalig ausgewertet.

Vorteilhafterweise ist die Hilfssteuerung dazu ausgebildet die Positionsmessungen des ersten und des zweiten Sensors zu vergleichen. Vorteilhafterweise werden die Positionsmessungen beider Sensoren von der Hauptsteuerung vorausgewertet und an die Hilfssteuerung übertragen.

Der erste und der zweite Sensor können insbesondere an der Hauptsteuerung angeschlossen sein. Die Übereinstimmung der Positionsmessungen kann im Rahmen der Überwachung der Hauptsteuerung erfolgen.

Vorteilhafterweise ist die Hilfssteuerung dazu ausgebildet, die Positionsmessungen der beiden Sensoren und/oder deren Auswertung in der Hauptsteuerung zu vergleichen und/oder zu validieren.

Die Hauptsteuerung ist vorzugsweise dazu ausgebildet, die Soll-Werte für die Stellposition und/oder die Stellgeschwindigkeit zu speichern.

Vorteilhafterweise ist die Hauptsteuerung dazu ausgebildet, die Sicherheitsfunktion auszuführen. Die Hilfssteuerung überwacht den Sicherheitskanal und bildet einen zusätzlichen Diagnosekanal. Die Hauptsteuerung und die Hilfssteuerung sind als separate Steuergeräte ausgebildet.

Ein besonderer Vorteil der offenbarten Sicherheitsarchitektur ist, dass mindestens ein Perfomance Level PLc erreichbar ist, selbst wenn nur die Hauptsteuerung besondere Sicherheitsmerkmale, insbesondere einen hohen MTTF-Wert ("mean time to failure") und/oder eine besondere Sicherheitszertifizierung, aufweist.

Weitere vorteilhafte Merkmale sind in den Unteransprüchen sowie in der folgenden Zeichnungsbeschreibung offenbart.

### Zeichnungsbeschreibung

Die Erfindung ist in den Zeichnungen beispielhaft und schematisch dargestellt. Es zeigen:
- Figur 1:: eine perspektivische Ansicht einer Holzbearbeitungsmaschine mit zwei Stellobjekten;
- Figur 2:: eine schematische Ansicht der Stellbewegung eines Stellobjekts;
- Figur 3:: eine Frontansicht auf ein schwenkbares Sägeblatt mit einem verstellbaren Werkstückanschlag;
- Figur 4:: eine vorteilhafte Sicherheitsarchitektur für eine Holzbearbeitungsmaschine mit einem Stellobjekt;
- Figur 5:: eine weitere Ausführungsform der Sicherheitsarchitektur;
- Figur 6:: eine Darstellung der Sicherheitsarchitektur mit möglichen Verbindungsmitteln.

### Detaillierte Beschreibung

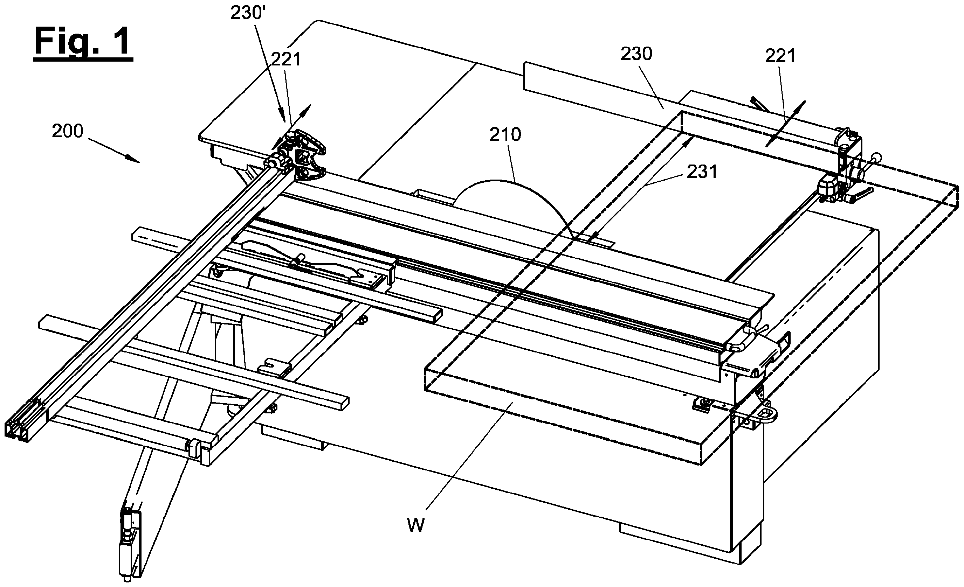

Figur 1 zeigt eine perspektivische Ansicht einer Holzbearbeitungsmaschine (200) am Beispiel einer Formatkreissäge. Die Holzbearbeitungsmaschine (200) umfasst als Bearbeitungsmittel (210) ein Sägeblatt. Das zu bearbeitende Werkstück (W) kann auf dem Maschinentisch aufgelegt und verschoben werden. Zur genaueren Führung des Werkstücks (W) verfügt die Holzbearbeitungsmaschine über zwei Stellobjekte (230, 230'). Das erste Stellobjekt (230) ist ein Werkstückanschlag, der sich entlang einer Stellbewegung (221) per Hand oder mit einer gesteuerten Bewegung eines Stellantriebs verschieben lässt. Das Werkstück (W) kann auf dem Maschinentisch mit dem Werkstückanschlag (230) in Anlage gebracht werden und entlang des Werkstückanschlags (230) in das Sägeblatt (210) geschoben werden.

Die Holzbearbeitungsmaschine (200) kann ein oder mehrere Stellobjekte (230, 230') umfassen. In der gezeigten Ausführungsform umfasst die Holzbearbeitungsmaschine (200) ein zusätzliches Stellobjekt (230'). Der erste Werkstückanschlag (230) wird auch Parallelanschlag oder Breitenanschlag genannt. Das zusätzliche Stellobjekt (230') kann insbesondere ein Längenanschlag oder ein Queranschlag sein. Das Stellobjekt (230') kann insbesondere auf einem schwenkbaren Ausleger an der Holzbearbeitungsmaschine (200) angeordnet sein.

Mit dem Stellobjekt (230) lässt sich das Werkstück (W) präzise zum Bearbeitungsmittel (210) positionieren und/oder führen. Durch die Verstellung des Stellobjekts (230), insbesondere entlang der Stellbewegung (221), lässt sich insbesondere ein Maß (231) des bearbeiteten Werkstücks einstellen.

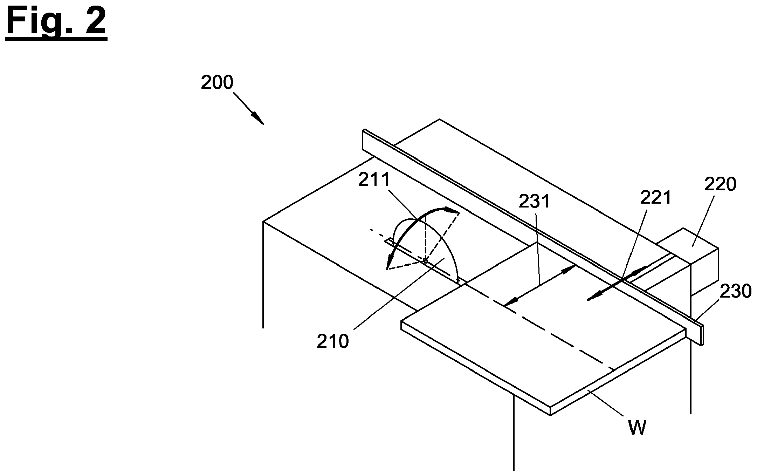

Figur 2 zeigt eine vereinfachte Darstellung einer Holzbearbeitungsmaschine (200) mit einem schwenkbaren Bearbeitungsmittel (210). Bei der gezeigten Ausführungsform handelt es sich um eine Kreissäge mit schwenkbarem Sägeblatt (210). Das Sägeblatt (210) ist entlang einer Schwenkbewegung (211) um einen einstellbaren Winkel schwenkbar. Durch die Verstellung des Schwenkwinkels des Sägeblatts kann sich der Gefahrenbereich für die Stellbewegung (221) des Stellobjekts (230) dynamisch verändern.

Die Holzbearbeitungsmaschine umfasst vorzugsweise einen separaten Stellantrieb (220) für die Verstellung eines oder mehrerer Stellobjekte (230). Bevorzugt verfügt jedes Stellobjekt (230) über einen separaten Stellantrieb (220). Das Stellobjekt (230), insbesondere der Parallelanschlag, lässt sich mit dem Stellantrieb (220) entlang der Stellbewegungsrichtung (221) bewegen und genau positionieren. Das Stellobjekt (230) kann mit dem Stellantrieb (220) bis an das Bearbeitungsmittel (210) herangefahren werden. Je nach Schwenkwinkel des Sägeblatts kann es beim Heranfahren des Stellobjekts (230) zu einer Kollision zwischen dem Stellobjekt (230) und dem Bearbeitungsmittel (210) kommen. Die Verstellung des Stellobjekts (230) über ein mechatronisches System in oder an einem Gefahrenbereich erfordert die Erfüllung besonderer Sicherheitsanforderungen. Die motorische Verstellung des Stellobjekts (230) stellt eine Sicherheitsfunktion dar. Im Falle einer Fehlfunktion einer der für die Ausführung der Sicherheitsfunktion verantwortlichen Komponenten könnte es zu einem Personen- oder Sachschaden kommen.

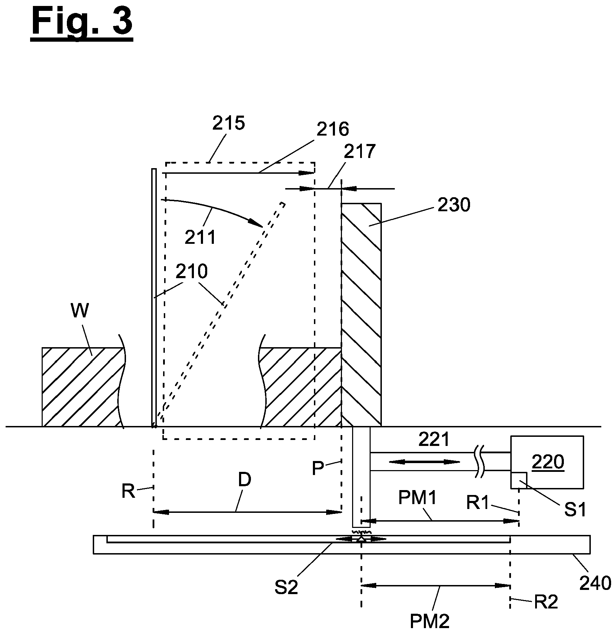

Figur 3 zeigt eine schematische Darstellung der Verstellung eines Stellobjekts (230) an einem Gefahrenbereich (215) um ein schwenkbares Sägeblatt (210). Bei Bedarf kann das Stellobjekt (230), hier der Werkstückanschlag, bis an das Bearbeitungsmittel (210), hier das schwenkbare Sägeblatt, herangefahren werden.

Um das Bearbeitungsmittel (210) bildet sich ein Gefahrenbereich (215). Im Falle eines schwenkbaren Sägeblatts oder anderen veränderlichen Gefahrenquellen kann der Gefahrenbereich eine variable Ausdehnung (216) aufweisen. Die Ausdehnung des Gefahrenbereichs (215) kann beispielsweise anhand von Maschinenparametern, Werkzeugparametern und/oder Nutzungsinformationen berechnet werden. Vorzugsweise ist der Gefahrenbereich durch die äußeren Abmessungen des Bearbeitungsmittels (210) zuzüglich eines Sicherheitsabstandes bestimmt. Innerhalb des Gefahrenbereichs (215) kann zwischen einem gefährlichen Annährungsbereich und einem tatsächlichen Kollisionsbereich unterschieden werden. Vorzugsweise kann das Stellobjekt innerhalb des gefährlichen Annährungsbereichs nur noch langsam bewegt werden. Eine Bewegung in den Kollisionsbereich wird durch die Sicherheitsarchitektur verhindert.

Das Stellobjekt (230) wird vorzugsweise über einen Stellantrieb (220) entlang der Stellbewegung (221) bewegt. Der Stellantrieb (220) umfasst vorzugsweise einen Schrittmotor. Mit einem Schrittmotor lässt sich das Stellobjekt präzise positionieren. Der Stellantrieb (220) kann das Stellobjekt (230) direkt oder indirekt, z.B. über ein Getriebe, verstellen. Das Stellobjekt (230) wird über eine für die Stellbewegung geeignete Lagerung geführt (nicht dargestellt). Bei den üblichen Holzbearbeitungsmaschinen ist das Stellobjekt (230) linear geführt. Je nach Abstand (217) des Stellobjekts (230) zum Gefahrenbereich (215) kann die Ansteuerung des Stellobjekts (230) in unterschiedlichen Modi erfolgen. Es ist vorteilhaft neben der Position auch die Geschwindigkeit der Stellbewegung (221) in Abhängigkeit des Abstands (217) zu steuern. In einer vorteilhaften Ausführungsform umfasst die Holzbearbeitungsmaschine (200) einen Stellantrieb (220) mit einem integrierten Positionssensor (S1). Der Sensor (S1) kann insbesondere als Inkrementalgeber ausgebildet sein, der bei einer Initialisierung auf einen bekannten Bezugspunkt referenziert wird.

Der zweite Sensor (S2) ist vorzugsweise in einer Sensoreinrichtung (240) integriert. Der zweite Sensor (S2) kann insbesondere als Magnetbandsensor ausgebildet sein.

Die Stellposition (P) des Stellobjekts (230) kann mit einem oder mehreren Sensoren mit Bezug auf eine oder mehrere Referenzen erfasst werden. Als Sensoren zur Ermittlung der Stellposition (P) des Stellobjekts (230) sind grundsätzlich verschiedene Arten von Sensoren zur absoluten oder relativen Weg- und/oder Positionsmessung geeignet.

Die Stellposition (P) kann in einer möglichen Ausführungsform durch eine erste Positionsmessung PM1, insbesondere auf eine erste Referenz (R1) eines ersten Sensors (S1), erfasst werden. Mit einer zweiten Positionsmessung (PM2) kann die Stellposition (P) des Stellobjekts (230) unabhängig, insbesondere redundant, von einem zweiten Sensor (S2) erfasst werden. Die Positionsmessungen (PM1, PM2) können von den Sensoren (S1, S2) und/oder einer Logikeinheit, insbesondere der Hauptsteuerung (C), auf eine gemeinsame Referenz (R) bezogen werden. Bei bekannten Maschinenparametern (z.B. Abmessungen und Anordnung der Bauteile) können die Positionsmessungen (PM1, PM2) normiert und/oder verglichen werden.

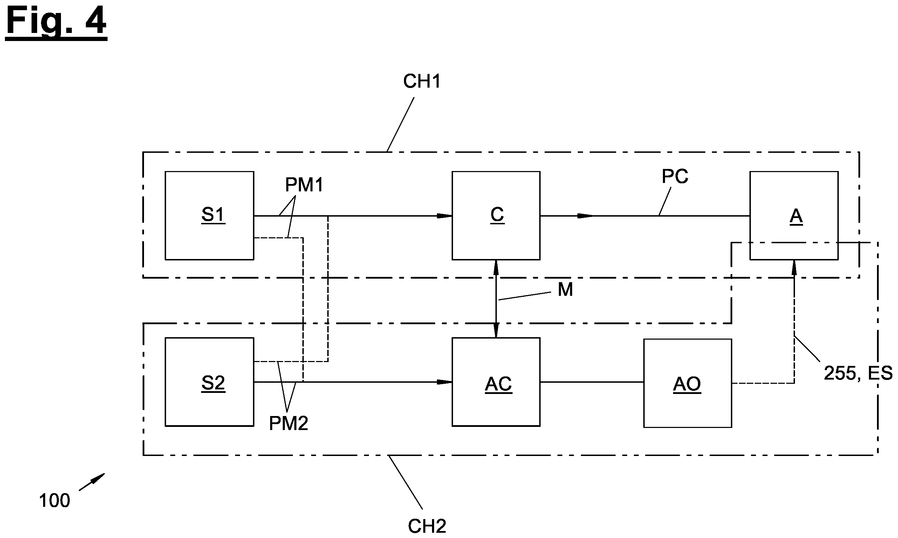

Figur 4 zeigt eine schematische Darstellung der Sicherheitsarchitektur (100) zur Absicherung der Sicherheitsfunktion. Die Sicherheitsarchitektur umfasst einen ersten Sicherheitskanal (CH1). Der Sicherheitskanal (CH1) bildet die eigentliche Sicherheitsfunktion, insbesondere das motorische Verstellen des Stellobjekts (230), ab. Die Stellposition und/oder weitere Messwerte werden durch mindestens einen Sensor (S1) erfasst. Die Hauptsteuerung (C) verarbeitet die Eingangsinformationen und wertet diese aus. Die Hauptsteuerung (C) bildet die Logikeinheit des Sicherheitskanals (CH1). Die Hauptsteuerung (C) wertet insbesondere Positionsmessungen, Benutzereingaben und weitere Maschinenparameter aus und berechnet eine Stellanweisung (PC) für die Antriebssteuerung (A). Je nach Betriebsmodus kann das Stellobjekt (230) mittels geeigneter Stellanweisungen (PC) für die Antriebssteuerung (A) auf unterschiedliche Weise verfahren werden. So ist es bspw. möglich eine durch den Benutzer vorgegebene Soll-Position des Stellobjekts (230) durch geeignete Stellanweisungen (PC) einzuregeln. Alternativ oder zusätzlich kann der Benutzer auch direkte Bewegungsbefehle zum benutzergesteuerten Verfahren des Stellobjekts vorgeben.

In der bevorzugten Ausführungsform erzeugt nur die Hauptsteuerung (C) Stellanweisungen (PC) für die Antriebssteuerung (A). Die Sicherheitsfunktion, d.h. das Verstellen des Stellobjekts, wird im Sicherheitskanal (CH1) durch die Hauptsteuerung (C) ausgeführt, wobei die Hilfssteuerung (AC) die Sicherheitsfunktion in einem zweiten Kanal (CH2) absichert, jedoch nicht redundant nachbildet.

Die Positionsmessungen (PM1, PM2) können sowohl zur Regelung als auch zur Absicherung der Stellbewegung ausgewertet werden.

Die Hilfssteuerung (AC) und der zweite Sensor (S2) können einen zweiten Kanal (CH2) bilden. Durch den zweiten Kanal (CH2) wird die Sicherheitsfunktion des ersten Kanals (CH1) abgesichert.

Die Stellposition (P) wird sowohl durch den ersten Sensor (S1) als auch durch den zweiten Sensor (S2) erfasst. Die Abfrage der Informationseingänge erfolgt zweikanalig.

Die Hilfssteuerung (AC) überwacht die Hauptsteuerung (C), insbesondere die Auswertung der Positionsmessungen (PM1, PM2). Vorzugsweise überwachen sich die Hauptsteuerung (C) und die Hilfssteuerung (AC) gegenseitig.

Ein Fehler bei der Auswertung in einer der beiden Logikeinheiten C oder AC kann im Rahmen der Überwachung festgestellt werden.

In einer besonders vorteilhaften Ausführungsform umfasst die Hilfssteuerung (AC) eine Überwachungskomponente, einen sog. Watchdog. In einer ebenfalls vorteilhaften Ausführungsform bezieht auch die Hilfssteuerung (AC) Positionsmessungen (PM1, PM2) des ersten Sensors (S1) und/oder des zweiten Sensors (S2). Vorteilhafterweise erfolgt die Auswertung der Positionsmessungen zweikanalig.

Bevorzugt steuern der erste Sicherheitskanal (CH1) und der zweite Kanal (CH2) dieselbe Antriebssteuerung (A) an. Die Hilfssteuerung (AC) umfasst vorzugsweise einen Hilfsausgang (AO). Der Hilfsausgang (AO) ist dazu ausgebildet einen Nothalt (ES) im Falle einer Fehlfunktion auszulösen.

Über den Nothalt (ES) kann das Stellobjekt (230), weitere Komponenten oder die ganze Maschine stillgesetzt werden.

Vorzugsweise umfasst nur die Hauptsteuerung (C) die Logikeinheit zur Ansteuerung der Antriebssteuerung (A), d.h. zur motorischen Verstellung des Stellobjekts. Die Hilfsteuerung überwacht vorzugsweise nur die korrekte Funktion der Hauptsteuerung. Dies hat den Vorteil, dass die Hilfsteuerung einen zweiten Sicherheitskanal bilden kann, ohne dieselbe Ausstattung wie die Hauptsteuerung zu benötigen.

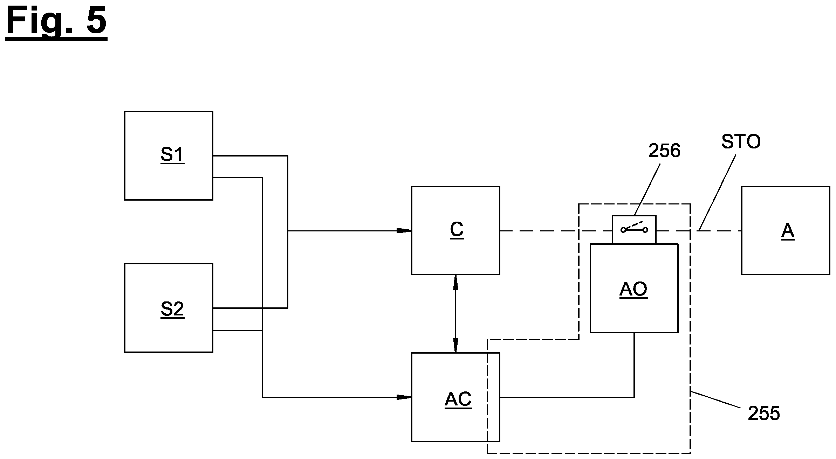

Figur 5 zeigt eine weitere besonders vorteilhafte Ausführungsform der Sicherheitsarchitektur. Die Sicherheitsarchitektur umfasst vorzugsweise einen Kontrollkanal (255). Der Kontrollkanal (255) wird durch einen Hilfsausgang (AO) gebildet. Der Kontrollkanal (255) umfasst vorzugsweise eine oder mehrere Unterbrechungsschaltungen (256). Mit der Unterbrechungsschaltung (256) lässt sich insbesondere eine Signalleitung, z.B. über einen Diagnosekanal oder durch Trennen eines Schalters, unterbrechen. Besonders vorteilhaft ist die Anordnung der Unterbrechungsschaltung (256) in einem oder mehreren Diagnosekanälen mit einer "safe torque off"-Funktion (STO).

Im Falle eines Fehlers, z.B. bei der Positionserfassung oder der Auswertung in einer Logikeinheiten, kann über den Kontrollkanal (255) und die Unterbrechungsschaltung (256) der Stellantrieb stillgelegt werden.

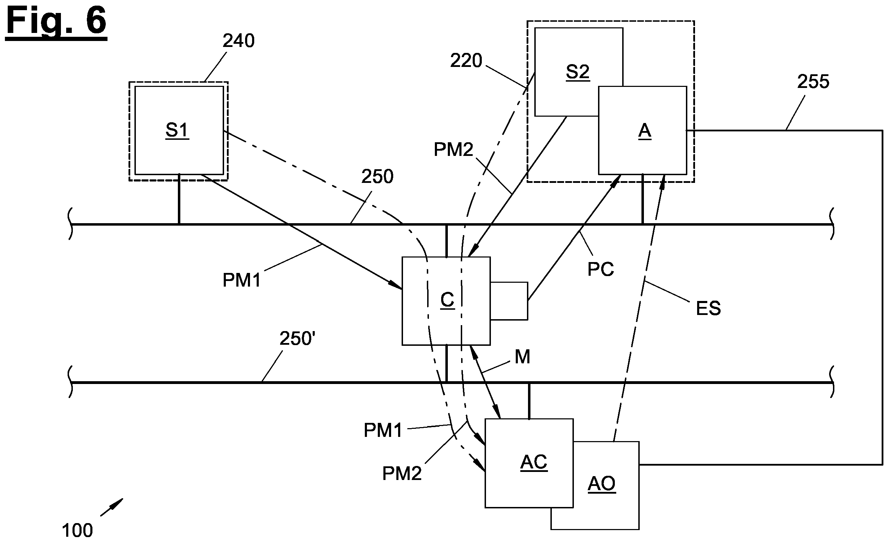

Figur 6 zeigt eine besonders vorteilhafte Ausführungsform der Sicherheitsarchitektur (100). Die Komponenten können über ein oder mehrere Busnetzwerke (250, 250') oder andere Übertragungsmittel verbunden sein.

Die in den Figuren 4 und 5 durch Striche oder Pfeile schematisch dargestellten Verbindungen zwischen den Elementen der Sicherheitsketten sind logischer Natur. Die Verbindungen können durch unterschiedliche direkte oder indirekte Verbindungswege realisiert werden.

In einer vorteilhaften Ausführungsform sind die Hauptsteuerung (C), der Stellantrieb (220) und die Sensoreinrichtung (240) über ein erstes Busnetzwerk (250), z.B. CANOpen, verbunden. Die Hilfssteuerung (AC) und die Hauptsteuerung (C) können über ein weiteres Busnetzwerk (250'), z.B. TCP/IP, verbunden sein.

In einer vorteilhaften Ausführungsform bezieht die Hilfssteuerung (AC) Positionsmessungen (PM1, PM2) des ersten Sensors (S1) und/oder des zweiten Sensors (S2) über die Hauptsteuerung (C). Die Hauptsteuerung (C) ist vorteilhafterweise dazu ausgebildet, die Positionsmessungen (PM1) und/oder die Positionsmessungen (PM2) vorzuverarbeiten und/oder an die Hilfssteuerung (AC) weiterzugeben. Bei der Vorverarbeitung können die Positionsmessungen insbesondere auf eine gemeinsame Referenz bezogen werden. Der Vergleich der Positionsmessungen durch die Hilfssteuerung (AC) im zweiten Kanal (CH2) ist dadurch auch mit einfacher Hardware möglich.

Vorteilhafterweise bezieht die Hilfssteuerung (AC) die Signale der ersten Sensors (S1) und/oder des zweiten Sensors (S2) nur über die Hauptsteuerung (C). Die Auswertung der Sensorsignale durch die Hilfssteuerung (AC) erfolgt vorzugsweise über die Überwachung (M) der Hauptsteuerung. Auf diese Weise kann eine zweikanalige Auswertung der Sensorsignale mit nur einer Hauptsteuerung (C) und einer einfacheren, insbesondere mit weniger Eingängen ausgestatteten, Hilfssteuerung (AC) erfolgen.

Bei einer Abweichung der Positionsmessungen oder einer Fehlfunktion der Hauptsteuerung (C) kann die Hilfssteuerung (AC) die Maschine in einen sicheren Zustand überführen.

Vorzugsweise ist der Hilfsausgang (AO) über eine separate, insbesondere kabelgebundene, Verbindung über einen Kontrollkanal (255) mit der Antriebssteuerung (A) verbunden. Die Verbindung (255) kann insbesondere über eine Unterbrechungsschaltung erfolgen.

In einer weiteren Ausführungsform sind die Hauptsteuerung (C) und die Hilfssteuerung (AC) dazu ausgebildet, eine Zeitmessung zur sicheren Berechnung der Geschwindigkeit einer Stellbewegung zu synchronisieren. Die Synchronisation kann beispielsweise durch einen Austausch von Zeitstempeln erfolgen. Die Zeitstempel können bspw. durch Prüfsummen oder andere Prüfkriterien verglichen und/oder verifiziert werden. Mithilfe der zweikanalig ermittelten Zeitmessung kann auch die Geschwindigkeit der Stellbewegung aus den Positionsmessungen zweikanalig ermittelt bzw. gesteuert werden. In dieser Ausführungsform ermöglicht die Sicherheitsarchitektur auch ein hohes Performance Level für die Geschwindigkeitserfassung. In der Nähe und/oder in einem Gefahrenbereich kann es notwendig sein, die Geschwindigkeit der Stellbewegung (221) mit einem hohen Performance Level zu ermitteln.

**Bezugszeichenliste**

| | | |
|---|---|---|
| 100 | Sicherheitsarchitektur | Safety architecture |
| 200 | Holzbearbeitungsmaschine, Kunststoffbearbeitungsmaschine | Woodworking machine, plastic processing maschine |
| 210 | Bearbeitungsmittel, Sägeblatt, Fräser | Processing means, saw blade |
| 211 | Schwenkbewegung | Tilt movement |
| 215 | (dynamischer) Gefahrenbereich | (dynamic) danger zone |
| 216 | Ausdehnung des Gefahrenbereichs | Extent of danger zone |
| 217 | Abstand zum Gefahrenbereich | Distance to danger zone |
| 220 | Stellantrieb, Schrittmotor | Actuation drive, step motor |
| 221 | Stellbewegung | Actuation movement |
| 230, 230' | Stellobjekt, Werkstückanschlag | Actuation object, workpiece stop |
| 231 | Eingestelltes Maß | Configured measure |
| 240 | Sensoreinrichtung, | Sensor equipment, magnetic |
| | Magnetbandsensor | strip encoder |
| 250 | Busnetzwerk | Bus network |
| 255 | Kontrollkanal | Control channel |
| 256 | Unterbrechungsschaltung | Interrupt circuit |
| A | Antriebssteuerung | Motor |
| AC | Hilfssteuerung | Auxiliary controller |
| AO | Hilfsausgang | Auxiliary output |
| C | Hauptsteuerung | Main controller |
| CH1 | Erster Sicherheitskanal | Frist safety channel |
| CH2 | Zweiter Kanal, Diagnosekanal | Second channel, diagnostic channel |
| ES | Nothalt | Emergency Stop |
| M | Überwachung, Kreuzvergleich | Monitoring, cross check |
| P | Stellposition | Actuation position |
| PC | Stellanweisung | Actuation command |
| PM1, PM2 | Positionsmessung | Position measurement |
| S1 | Erster Sensor | First sensor |
| S2 | Zweiter Sensor | Second sensor |
| STO | Diagnosekanal, Safe torque off | Diagnostic channel, safe torque off |
| D, Di | Referenzabstand | Distance to reference |
| R, Ri | Referenz | Reference |
| W | Werkstück, Holzplatte | Workpiece, wood panel |

## Patentansprüche

1. Holzbearbeitungsmaschine, insbesondere eine Kreissäge oder Fräse, zur Bearbeitung von Werkstücken (W) aus Holz oder Kunststoff, umfassend ein oder mehrere Bearbeitungsmittel (210) und mindestens ein Stellobjekt (230), das mit einem Stellantrieb (220) in einer einstellbaren Stellposition (P) positionierbar ist, wobei das Stellobjekt (230), insbesondere ein Werkstückanschlag, durch eine gesteuerte Stellbewegung (221) auch in einen statischen oder dynamischen Gefahrenbereich (215) fahrbar ist, wobei die Holzbearbeitungsmaschine (200) eine Sicherheitsarchitektur (100) zur sicheren Verstellung des Stellobjekts (230) umfasst, wobei die Sicherheitsarchitektur (100) einen ersten Sensor (S1) zur Ermittlung der Stellposition (P) und einen zweiten Sensor (S2) zur Ermittlung der Stellposition (P), eine Hauptsteuerung (C), eine Hilfssteuerung (AC) und eine Antriebssteuerung (A) des Stellantriebs (220) umfasst, wobei die Hauptsteuerung (C) dazu ausgebildet ist, Positionsmessungen (PM1, PM2) des ersten Sensors (S1) und des zweiten Sensors (S2) auszuwerten und eine Stellanweisung (PC) für die Antriebssteuerung (A) zu erzeugen, wobei die Hilfssteuerung (AC) dazu ausgebildet ist, die Hauptsteuerung (C) zu überwachen.

2. Holzbearbeitungsmaschine nach Anspruch 1, wobei die Hilfssteuerung (AC) einen Kontrollkanal (255) umfasst und/oder über einen Kontrollkanal (255) direkt oder indirekt mit der Antriebssteuerung (A) verbunden ist.

3. Holzbearbeitungsmaschine nach Anspruch 2, wobei der Kontrollkanal (255) eine Unterbrechungsschaltung (256) für ein oder mehrere Steuersignale, insbesondere eine Stellanweisung (PC) und/oder einen Diagnosekanal (STO), der Antriebssteuerung (A) umfasst.

4. Holzbearbeitungsmaschine nach einem der vorhergehenden Ansprüche, wobei die Hilfssteuerung (AC) dazu ausgebildet ist, die Positionsmessungen (PM1, PM2) des ersten Sensors (S1) und/oder des zweiten Sensors (S2) auszuwerten.

5. Holzbearbeitungsmaschine nach einem der vorhergehenden Ansprüche, wobei die Hauptsteuerung (C) dazu ausgebildet ist, die Positionsmessungen (PM1, PM2) des ersten Sensors (S1) und/oder des zweiten Sensors (S2) an die Hilfssteuerung (AC) zu übertragen.

6. Holzbearbeitungsmaschine nach einem der vorhergehenden Ansprüche, wobei die Hilfssteuerung (AC) dazu ausgebildet ist, die Positionsmessung (PM1) des ersten Sensors (S1) und die Positionsmessung (PM2) des zweiten Sensors (S2) zu vergleichen und/oder einen Vergleich der Hauptsteuerung (C) zu verifizieren.

7. Holzbearbeitungsmaschine nach einem der vorhergehenden Ansprüche, wobei die Hauptsteuerung (C) einen ersten Sicherheitskanal (CH1) bildet und die Hilfssteuerung (AC) einen zweiten Kanal (CH2), insbesondere einen Diagnosekanal, bildet.

8. Holzbearbeitungsmaschine nach Anspruch 7, wobei der erste Sicherheitskanal (CH1) und der zweite Kanal (CH2) dieselbe Antriebssteuerung (A) umfassen.

9. Holzbearbeitungsmaschine nach einem der vorhergehenden Ansprüche, wobei die Hauptsteuerung (C) dazu ausgebildet ist, die Hilfssteuerung (AC) zu überwachen.

10. Holzbearbeitungsmaschine nach einem der vorhergehenden Ansprüche, wobei die Hauptsteuerung (C) und die Hilfssteuerung (AC) dazu ausgebildet sind, sich gegenseitig zu überwachen, insbesondere mittels einer Überwachungskomponente.

11. Holzbearbeitungsmaschine nach einem der vorhergehenden Ansprüche, wobei die Hauptsteuerung (C) und/oder die Hilfssteuerung (AC) dazu ausgebildet ist, eine Zeitmessung zur sicheren Berechnung der Geschwindigkeit einer Stellbewegung (221) zu synchronisieren.

12. Holzbearbeitungsmaschine nach einem der vorhergehenden Ansprüche, wobei die Hilfssteuerung (AC) dazu ausgebildet ist, einen Fehler des ersten Sensors (S1), des zweiten Sensors (S2) und/oder der Hauptsteuerung (C) zu erkennen und/oder einen Nothalt (ES), insbesondere der Antriebssteuerung (A), auszulösen.

13. Holzbearbeitungsmaschine nach einem der vorhergehenden Ansprüche, wobei nur die Hauptsteuerung (C) dazu ausgebildet ist, die Stellanweisungen (PC) für die Antriebssteuerung (A) zu erzeugen.

14. Holzbearbeitungsmaschine nach einem der vorhergehenden Ansprüche, umfassend eine Sensoreinrichtung (240) zur Erfassung der Position eines Stellobjekts (230), insbesondere mit einem Magnetbandsensor als zweiten Sensor (S2).

15. Holzbearbeitungsmaschine nach einem der vorhergehenden Ansprüche, umfassend einen Stellantrieb (220), insbesondere mit einem Schrittmotor, mit einem integrierten Wegmesser als ersten Sensor (S1).

## Claims

1. Woodworking machine, in particular a circular saw or milling machine, for processing workpieces (W) made of wood or plastic, comprising one or more processing means (210) and at least one control object (230), which can be positioned in an adjustable control position (P) by an actuator (220), wherein the control object (230), in particular a workpiece stop, can also be moved into a static or dynamic hazardous area (215) by a controlled actuating movement (221), wherein the woodworking machine (200) comprises a safety architecture (100) for the safe adjustment of the control object (230), wherein the safety architecture (100) comprises a first sensor (S1) for determining the control position (P) and a second sensor (S2) for determining the control position (P), a main controller (C), an auxiliary controller (AC) and a drive controller (A) of the actuator (220), wherein the main controller (C) is designed to evaluate position measurements (PM1, PM2) from the first sensor (S1) and the second sensor (S2) and to generate an actuating instruction (PC) for the drive controller (A), wherein the auxiliary controller (AC) is designed to monitor the main controller (C).

2. Woodworking machine according to Claim 1, wherein the auxiliary controller (AC) comprises a monitoring channel (255) and/or is directly or indirectly connected to the drive controller (A) via a monitoring channel (255) .

3. Woodworking machine according to Claim 2, wherein the monitoring channel (255) comprises an interrupt circuit (256) for one or more control signals, in particular an actuating instruction (PC) and/or a diagnostic channel (STO), of the drive controller (A).

4. Woodworking machine according to one of the preceding claims, wherein the auxiliary controller (AC) is designed to evaluate the position measurements (PM1, PM2) from the first sensor (S1) and/or the second sensor (S2) .

5. Woodworking machine according to one of the preceding claims, wherein the main controller (C) is designed to transmit the position measurements (PM1, PM2) from the first sensor (S1) and/or the second sensor (S2) to the auxiliary controller (AC).

6. Woodworking machine according to one of the preceding claims, wherein the auxiliary controller (AC) is designed to compare the position measurement (PM1) from the first sensor (S1) and the position measurement (PM2) from the second sensor (S2) and/or to verify a comparison to the main controller (C).

7. Woodworking machine according to one of the preceding claims, wherein the main controller (C) forms a first safety channel (CH1) and the auxiliary controller (AC) forms a second channel (CH2), in particular a diagnostic channel.

8. Woodworking machine according to Claim 7, wherein the first safety channel (CH1) and the second channel (CH2) comprise the same drive controller (A).

9. Woodworking machine according to one of the preceding claims, wherein the main controller (C) is designed to monitor the auxiliary controller (AC).

10. Woodworking machine according to one of the preceding claims, wherein the main controller (C) and the auxiliary controller (AC) are designed to monitor each other, in particular by means of a monitoring component.

11. Woodworking machine according to one of the preceding claims, wherein the main controller (C) and/or the auxiliary controller (AC) is designed to synchronize a time measurement for the reliable calculation of the speed of an actuating movement (221).

12. Woodworking machine according to one of the preceding claims, wherein the auxiliary controller (AC) is designed to detect a fault in the first sensor (81), the second sensor (S2) and/or the main controller (C) and/or to trigger an emergency stop (ES), in particular of the drive controller (A).

13. Woodworking machine according to one of the preceding claims, wherein only the main controller (C) is designed to generate the actuating instructions (PC) for the drive controller (A).

14. Woodworking machine according to one of the preceding claims, comprising a sensor device (240) for detecting the position of a control object (230), in particular with a magnetic tape sensor as the second sensor (S2).

15. Woodworking machine according to one of the preceding claims, comprising an actuator (220), in particular having a stepping motor, with an integrated displacement transducer as the first sensor (S1).

## Revendications

1. Machine de traitement du bois, en particulier scie circulaire ou fraiseuse, destinée au traitement de pièces (W) en bois ou en matière synthétique, ladite machine comprenant un ou plusieurs moyens de traitement (210) et au moins un objet de réglage (230) qui peut être positionné dans une position de réglage réglable (P) au moyen d'un mécanisme de réglage (220), l'objet de réglage (230), en particulier une butée de pièce, pouvant également être déplacé jusque dans une zone dangereuse statique ou dynamique (215) par un mouvement de réglage commandé (221), la machine de traitement du bois (200) comprenant une architecture de sécurité (100) destinée à déplacer de manière sûre l'objet de réglage (230), l'architecture de sécurité (100) comprenant un premier capteur (S1) destiné à déterminer la position de réglage (P) et un deuxième capteur (S2) destiné à déterminer la position de réglage (P), une commande principale (C), une commande auxiliaire (AC) et une commande (A) du mécanisme de réglage (220), la commande principale (C) étant conçue pour évaluer des mesures de position (PM1, PM2) du premier capteur (S1) et du deuxième capteur (S2) et pour générer une instruction de réglage (PC) destinée à la commande de mécanisme (A), la commande auxiliaire (AC) étant conçue pour surveiller la commande principale (C).

2. Machine de traitement du bois selon la revendication 1, la commande auxiliaire (AC) comprenant un canal de contrôle (255) et/ou étant reliée directement ou indirectement à la commande de mécanisme (A) par le biais d'un canal de contrôle (255).

3. Machine de traitement du bois selon la revendication 2, le canal de contrôle (255) comprenant un circuit d'interruption (256) destiné à un ou plusieurs signaux de commande, en particulier une instruction de réglage (PC) et/ou un canal de diagnostic (STO), de la commande de mécanisme (A).

4. Machine de traitement du bois selon l'une des revendications précédentes, la commande auxiliaire (AC) étant conçue pour évaluer les mesures de position (PM1, PM2) du premier capteur (S1) et/ou du deuxième capteur (S2) .

5. Machine de traitement du bois selon l'une des revendications précédentes, la commande principale (C) est conçue pour transmettre les mesures de position (PM1, PM2) du premier capteur (S1) et/ou du deuxième capteur (S2) à la commande auxiliaire (AC).

6. Machine de traitement du bois selon l'une des revendications précédentes, la commande auxiliaire (AC) étant conçue pour comparer la mesure de position (PM1) du premier capteur (S1) et la mesure de position (PM2) du deuxième capteur (S2) et/ou pour vérifier une comparaison de la commande principale (C).

7. Machine de traitement du bois selon l'une des revendications précédentes, la commande principale (C) formant un premier canal de sécurité (CH1) et la commande auxiliaire (AC) formant un deuxième canal (CH2), notamment un canal de diagnostic.

8. Machine de traitement du bois selon la revendication 7, le premier canal de sécurité (CH1) et le deuxième canal (CH2) comprenant la même commande de mécanisme (A).

9. Machine de traitement du bois selon l'une des revendications précédentes, la commande principale (C) étant conçue pour surveiller la commande auxiliaire (AC) .

10. Machine de traitement du bois selon l'une des revendications précédentes, la commande principale (C) et la commande auxiliaire (AC) étant conçues pour se surveiller mutuellement, notamment au moyen d'un composant de surveillance.

11. Machine de traitement du bois selon l'une des revendications précédentes, la commande principale (C) et/ou la commande auxiliaire (AC) étant conçues pour synchroniser une mesure de temps destinée au calcul sûr de la vitesse d'un mouvement de réglage (221).

12. Machine de traitement du bois selon l'une des revendications précédentes, la commande auxiliaire (AC) étant conçue pour détecter un défaut dans le premier capteur (S1), le deuxième capteur (S2) et/ou la commande principale (C) et/ou déclencher un arrêt d'urgence (ES), en particulier de la commande de mécanisme (A).

13. Machine de traitement du bois selon l'une des revendications précédentes, seule la commande principale (C) étant conçue pour générer les instructions de réglage (PC) destinées à la commande de mécanisme (A).

14. Machine de traitement du bois selon l'une des revendications précédentes, comprenant un dispositif de détection (240) destiné à détecter la position d'un objet de réglage (230), ledit dispositif de détection comprenant notamment un capteur à bande magnétique comme deuxième capteur (S2).

15. Machine de traitement du bois selon l'une des revendications précédentes, comprenant un mécanisme de réglage (220), pourvu notamment d'un moteur pas à pas, d'un dispositif de mesure de distance intégré comme premier capteur (S1).
